# EUROPEAN PATENT SPECIFICATION

(11) **EP 4 300 703 B1**
(45) Date of publication and mention of the grant of the patent: **22.04.2026**
(21) Application number: 22760059.0
(22) Date of filing: 23.02.2022
(51) Int. Cl.: H01M 50/55, H01M 50/559, H01M 50/593, H01M 50/588, H01M 50/502, H01M 50/188, H01M 50/107, H01M 50/152, H01M 10/04, H01M 50/167

(54) **SECONDARY BATTERY, SECONDARY BATTERY MANUFACTURING METHOD, BATTERY PACK AND VEHICLE**
SEKUNDÄRBATTERIE, SEKUNDÄRBATTERIEHERSTELLUNGSVERFAHREN, BATTERIEPACK UND FAHRZEUG
BATTERIE SECONDAIRE, PROCÉDÉ DE FABRICATION DE BATTERIE SECONDAIRE, BLOC-BATTERIE ET VÉHICULE

(30) Priority: 23.02.2021 KR 20210024411
(43) Date of publication of application: 03.01.2024
(73) Proprietor: LG Energy Solution, Ltd., Seoul 07335 (KR)
(72) Inventor: JO, Minki, Daejeon 34122 (KR); KIM, Do Gyun, Daejeon 34122 (KR); HWANG BO, Kwang Su, Daejeon 34122 (KR); PARK, Jeong Eon, Daejeon 34122 (KR)
(74) Representative: Goddar, Heinz J.
(86) International application number: PCT/KR2022/002676
(87) International publication number: WO 2022/182143

(56) References cited:
- EP-A1- 3 584 853
- WO-A1-2020/110888
- KR-A- 20080 016 047
- KR-A- 20110 082 344
- KR-A- 20140 020 482
- KR-A- 20180 057 362
- KR-A- 20190 030 016

## Description

### [Technical Field]

This application claims priority to and the benefit of Korean Patent Application No. 10-2021-0024411 filed with the Korean Intellectual Property Office on February 23, 2021.

The present invention relates to a secondary battery, a secondary battery manufacturing method, a battery pack, and a vehicle.

### [Background Art]

A secondary battery is easy to apply to product groups and has electrical characteristics such as high energy density. Therefore, the secondary battery is widely applied not only to portable devices but also to electric vehicles (EVs) or hybrid electric vehicles (HEVs) driven by electrical driving sources.

The secondary battery attracts attention as a new energy source for improving environmental-friendly characteristics and energy efficiency because the secondary battery achieves a primary advantage of innovatively reducing the use of fossil fuel and does not generate any by-products from the use of energy.

Types of secondary batteries currently used widely include a lithium-ion battery, a lithium-polymer battery, a nickel-cadmium battery, a nickel-hydrogen battery, a nickel-zinc battery, and the like. An operating voltage of a unit secondary battery, i.e., a unit battery is about 2.5 V to 4.5 V. Therefore, when an output voltage higher than the operating voltage is required, a plurality of secondary batteries is connected in series and constitutes a battery pack. In addition, the plurality of secondary batteries is connected in parallel and constitutes the battery pack depending on a charge/discharge capacity required for the battery pack. Therefore, the number of secondary batteries included in the battery pack and the type of electrical connection between the secondary batteries may be variously set depending on required output voltages and/or charge/discharge capacities.

To manufacture a battery pack by using a cylindrical secondary battery, typically, a plurality of cylindrical secondary batteries is disposed upright in a housing, and the plurality of cylindrical secondary batteries is electrically connected to each other by connecting upper ends and lower ends of the cylindrical secondary batteries by using positive electrode terminals and negative electrode terminals.

This is because a negative electrode non-coated portion of an electrode assembly accommodated in a battery can extend downward and is electrically connected to a bottom surface of the battery can, and a positive electrode non-coated portion extends upward and is electrically connected to a top cap in the cylindrical secondary battery. That is, in the cylindrical secondary battery, the bottom surface of the battery can is generally used as a negative electrode terminal, and the top cap configured to cover an upper end opening portion of the battery can is generally used as a positive electrode terminal.

However, when the positive electrode terminal and the negative electrode terminal of the cylindrical secondary battery are positioned at the opposite positions, electrical connection components such as busbars for electrically connecting the plurality of cylindrical secondary batteries need to be applied to both the upper and lower portions of the cylindrical secondary battery. This complicates an electrical connection structure of the battery pack.

Moreover, in the above-mentioned structure, components for ensuring electrical insulation and components for ensuring waterproofness need to be individually applied to the upper and lower portions of the battery pack, which increases the number of components to be applied and complicates the structure.

Accordingly, there is a need to develop a cylindrical secondary battery having a structure in which a positive electrode terminal and a negative electrode terminal are provided in the same direction in order to simplify an electrical connection structure between a plurality of cylindrical secondary batteries.
EP 3 584 853 A1 describes a cap assembly for a cylindrical battery cell having no beading part, in order to minimize a size of a dead space defined in the cylindrical can. Inter alia, the cap assembly comprises a cap plate, a safety vent, a gasket and a thermoplastic adhesive layer. The safety vent surrounds a lower surface, an outer circumference and an outer portion of an upper surface of the cap plate, and the gasket in turn surrounds a portion of a lower surface and an outer circumference of the safety vent. The thermoplastic adhesive layer couples a portion of an upper surface of the safety vent and an upper surface of the gasket to a washer arranged on and welded to an upper surfacea of the cylindrical battery case.
WO 2020/110888 A1 describes a cap assembly for a cylindrical battery cell having a beading part, in order to minimize a size of a dead space defined in the cylindrical can. The cap assembly includes a sealing plate electrically connected to a first electrode of the electrode assembly, a second gasket surrounding an outer circumference and outer portions of upper and lower surfaces of the sealing plate, and a cap electrically connected to a second electrode of the electrode assembly and surrounding an outer circumference and outer portions of upper and lower surfaces of the second gasket. The cap has a ring-shaped top plate portion, a circumferential side wall portion extending from a peripheral edge of the top plate portion, and circumferential rib and holding portions, initially extending concentrically from a lower surface of the top plate portion. The top-plate portion and the holding portion surround and hold the second gasket, whereas the side wall portion and the rib portion hold a first gasket on an opening edge portion of the battery can.

### [Detailed Description of the Invention]

### [Technical Problem]

An object of the present invention is to provide a secondary battery and a secondary battery manufacturing method, in which the secondary battery has a structure in which a positive electrode terminal and a negative electrode terminal are provided in the same direction, and a conductive washer component may be applied without limitation related to a thickness and a material thereof, thereby implementing high energy density.

Another object of the present invention is to provide a battery pack and a vehicle including the above-mentioned secondary battery.

However, technical problems to be solved by the present invention are not limited to the above-mentioned technical problems, and other technical problems, which are not mentioned above, may be clearly understood by those skilled in the art from the following description of the invention.

### [Technical Solution]

An embodiment of the present invention provides a secondary battery including: an electrode assembly having a first electrode tab and a second electrode tab; a battery can electrically connected to the second electrode tab and having an opening portion configured to accommodate the electrode assembly; a top cap configured to cover the opening portion of the battery can and electrically connected to the first electrode tab; a gasket provided between the battery can and the top cap; a conductive washer electrically connected to the battery can and configured to adjoin at least a part of a peripheral portion of the opening portion; an insulative washer provided between the top cap and the conductive washer and configured to electrically insulate the top cap and the conductive washer; and a fixing member provided between the conductive washer and the insulative washer. A crimping portion of the battery can is provided on the peripheral portion of the opening portion of the battery can, and the conductive washer adjoins the crimping portion. The conductive washer has a disk shape having a hole formed in a central portion thereof.

Another embodiment of the present invention provides a method of manufacturing the secondary battery according to the above-mentioned embodiment, the method including: accommodating the electrode assembly, which has the first electrode tab and the second electrode tab, in the battery can electrically connected to the second electrode tab and having an opening portion configured to accommodate the electrode assembly; covering the opening portion of the battery can by coupling: the top cap disposed in the opening portion of the battery can and electrically connected to the first electrode tab; the gasket provided between the battery can and the top cap; the conductive washer electrically connected to the battery can and configured to adjoin at least a part of the peripheral portion of the opening portion; and an insulative washer provided between the top cap and conductive washer and configured to electrically insulate the top cap and the conductive washer; and injecting a curing agent between the conductive washer and the insulative washer.

Still another embodiment of the present invention provides a battery pack including: the secondary battery according to the above-mentioned embodiment; and a pack housing configured to accommodate the secondary battery.

Yet another embodiment of the present invention provides a vehicle including the battery pack according to the above-mentioned embodiment.

### [Advantageous Effects]

According to the cylindrical secondary battery, the conductive washer component and the insulative washer may be provided to expand the negative electrode terminal. The conductive washer component is provided to increase the area in which the connection component such as a busbar may be joined to connect the plurality of cylindrical secondary batteries for constituting the battery pack. Because of the above-mentioned function of the conductive washer component, the conductive washer component needs to have rigidity at a predetermined level or higher to resist deformation that may occur during the welding process.

Because the crimping portion for finishing the opening portion of the cylindrical secondary battery has height dispersion caused by the assembling process, it is not easy to fix the conductive washer seated on the crimping portion. In addition, a method of fixing the conductive washer by using the insulator provided between the conductive washer and the top cap may be considered. However, the conductive washer needs to have rigidity to some extent or more and a thickness at a predetermined level or more in order to implement the structural fixation using the insulator. In a case in which the thickness increases to ensure rigidity of the conductive washer, an electric loss inevitably occurs because of high electrical resistance during a process in which electric current flows toward the busbar at the upper side through the conductive washer.

According to one aspect of the present invention, the unidirectional electrical connection in which the positive electrode terminal and the negative electrode terminal are provided in the same direction is implemented in the cylindrical secondary battery. Further, the conductive washer component, which provides a sufficient area in which the connection component such as the busbar for electrically connecting the secondary batteries may be coupled may be stably seated on the crimping portion.

In addition, according to another aspect of the present invention, the conductive washer component may be applied without limitation related to the thickness and material thereof, thereby ensuring low electrical resistance and increasing energy density of the secondary battery.

### [Brief Description of Drawings]

The following drawings attached to the present specification illustrate exemplary embodiments of the present invention and serve to further understand the present invention together with the following detailed description of the present invention, and the present invention should not be interpreted as being limited to the items illustrated in the drawings.
FIG. 1 is a view illustrating an external appearance of a cylindrical secondary battery according to an embodiment of the present invention.
FIG. 2 is a cross-sectional view illustrating an internal structure of the cylindrical secondary battery according to the embodiment of the present invention.
FIG. 3 is a schematic view illustrating a part of the cylindrical secondary battery according to the embodiment of the present invention, in which FIG. 3A is an enlarged cross-sectional view illustrating a conductive washer adjoining a crimping portion, and FIG. 3B is an enlarged cross-sectional view illustrating a fixing member provided between the conductive washer and an insulative washer.
FIGS. 4 to 7 are partial cross-sectional views illustrating an upper structure of the cylindrical secondary battery according to the embodiment of the present invention.
FIGS. 8 and 9 are views illustrating a current collecting plate applied to the present invention.
FIGS. 10 and 11 are cross-sectional views illustrating a coupling structure between the current collecting plate and an electrode assembly applied to the present invention.
FIG. 12 is a partial cross-sectional view illustrating a lower structure of the cylindrical secondary battery according to the embodiment of the present invention.
FIG. 13 is a view illustrating a lower surface of the cylindrical secondary battery according to the embodiment of the present invention.
FIG. 14 is a schematic view illustrating a battery pack according to the embodiment of the present invention.
FIG. 15 is a conceptual view illustrating a vehicle according to the embodiment of the present invention.

### [Explanation of Reference Symbols]

- 1:: Cylindrical secondary battery
- 2:: Pack housing
- 3:: Battery pack
- 5:: Vehicle
- 10:: Electrode assembly
- 11:: First electrode tab
- 12:: Second electrode tab
- 20:: Battery can
- 21:: Beading portion
- 22:: Crimping portion
- 22a:: Insertion groove
- 23:: Venting portion
- 30:: Top cap
- 31:: Protruding portion
- 40:: Conductive washer
- 41:: Insertion protrusion
- 50:: Gasket
- 60:: Insulative washer
- 61:: Fixing member
- 70:: Current collecting plate
- 71:: Sub-plate
- 72:: Lead
- 80:: Insulation plate
- 81:: Lead hole
- 90:: Connection plate

### [Best Mode]

Hereinafter, exemplary embodiments of the present invention will be described in detail with reference to the accompanying drawings. In addition, terms or words used in the specification and the claims should not be interpreted as being limited to a general or dictionary meaning and should be interpreted as a meaning and a concept which conform to the present invention based on a principle that an inventor can appropriately define a concept of a term in order to describe his/her own invention by the best method. Therefore, the exemplary embodiments disclosed in the present specification and the configurations illustrated in the drawings are just the best preferred exemplary embodiments of the present invention. Accordingly, it should be appreciated that various equivalents and modified examples capable of substituting the exemplary embodiments may be made at the time of filing the present application.

Throughout the specification, unless explicitly described to the contrary, the word "comprise/include" and variations such as "comprises/includes" or "comprising/including" will be understood to imply the inclusion of stated elements, not the exclusion of any other elements. In addition, the term "unit", "part", or the like, which is described in the specification, means a unit that processes one or more functions or operations. In addition, throughout the specification, the term "A to B" means "A or more and B or less", i.e., a numerical value range including both A and B. Hereinafter, an embodiment of the present invention will be described with reference to the drawings.

The embodiment of the present invention provides a secondary battery including: an electrode assembly 10 having a first electrode tab 11 and a second electrode tab 12; a battery can 20 electrically connected to the second electrode tab 12 and having an opening portion configured to accommodate the electrode assembly 10; a top cap 30 configured to cover the opening portion of the battery can 20 and electrically connected to the first electrode tab 11; a gasket 50 provided between the battery can 20 and the top cap 30; a conductive washer 40 electrically connected to the battery can 20 and configured to adjoin at least a part of a peripheral portion of the opening portion; an insulative washer 60 provided between the top cap 30 and the conductive washer 40 and configured to electrically insulate the top cap 30 and the conductive washer 40; and a fixing member 61 provided between the conductive washer 40 and the insulative washer 60.

The secondary battery includes the conductive washer 40 and the insulative washer 60, thereby implementing a unidirectional electrical connection in which a positive electrode terminal and a negative electrode terminal are provided in the same direction. In addition, the secondary battery includes the fixing member 61, such that the conductive washer component may be applied without limitation related to a thickness and a material thereof, thereby ensuring low electrical resistance.

The secondary battery may be a cylindrical secondary battery. The first electrode tab 11 may be a non-coated portion of a first electrode current collector constituting the electrode assembly, the non-coated portion having no first electrode active material. The second electrode tab 12 may be a non-coated portion of a second electrode current collector constituting the electrode assembly, the non-coated portion having no second electrode active material.

The first electrode tab 11 and the second electrode tab 12 may be bent toward a winding center of the electrode assembly.

Since the electrode tab is bent, it is possible to advantageously ensure low electrical resistance and increase energy density of the secondary battery.

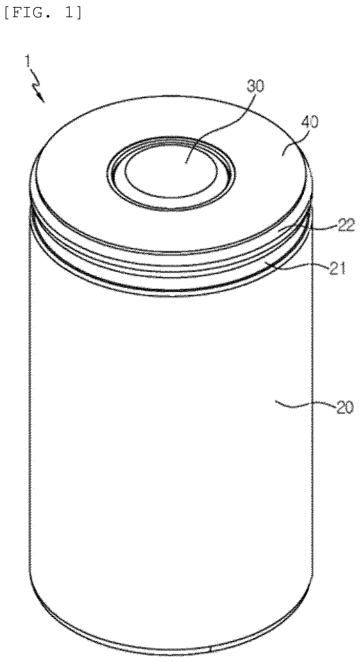

Referring to FIGS. 1 to 6, the cylindrical secondary battery 1 according to the embodiment of the present invention includes the electrode assembly 10, the battery can 20, the top cap 30, the conductive washer 40, the gasket 50, the insulative washer 60, and the fixing member 61. The cylindrical secondary battery 1 may further include a current collecting plate 70, an insulation plate 80, and/or a connection plate 90 in addition to the above-mentioned components.

Referring to FIGS. 1 to 6, the electrode assembly 10 includes a first electrode plate having a first polarity, a second electrode plate having a second polarity, and a separator provided between the first electrode plate and the second electrode plate. The electrode assembly 10 may have a jelly-roll shape. That is, the electrode assembly 10 may be manufactured by winding a stack, which is made by sequentially stacking the first electrode plate, the separator, and the second electrode plate at least once, around a winding center C. In this case, a separator may be provided on an outer peripheral surface of the electrode assembly 10 to implement insulation from the battery can 20. The first electrode plate is a positive or negative plate, and the second electrode plate is an electrode plate having a polarity opposite to a polarity of the first electrode plate. For example, the first electrode plate may be a positive plate, and the second electrode plate may be a negative plate.

The first electrode plate includes the first electrode current collector and the first electrode active material applied onto one surface or two opposite surfaces of the first electrode current collector. The non-coated portion onto which no first electrode active material is applied is provided at one end of the first electrode current collector based on a width direction (a direction parallel to a Z-axis). The non-coated portion serves as the first electrode tab 11. The first electrode tab 11 is provided at an upper side of the electrode assembly 10 based on a height direction (the direction parallel to the Z-axis), and the electrode assembly 10 is accommodated in the battery can 20.

The second electrode plate includes the second electrode current collector and the second electrode active material applied onto one surface or two opposite surfaces of the second electrode current collector. The non-coated portion onto which no second electrode active material is applied is provided at the other end of the second electrode current collector based on the width direction (the direction parallel to the Z-axis). The non-coated portion serves as the second electrode tab 12. The second electrode tab 12 is provided at a lower side of the electrode assembly 10 based on the height direction (the direction parallel to the Z-axis), and the electrode assembly 10 is accommodated in the battery can 20.

That is, the first electrode tab 11 may be provided at one end of the electrode assembly, and the second electrode tab may be provided at the other end of the electrode assembly.

Referring to FIGS. 1 to 6, the battery can 20 may have a cylindrical shape. The battery can 20 may be provided in the form of a cylindrical receptacle having an opening portion. The battery can 20 may be made of a metallic material having conductivity. The battery can 20 accommodates the electrode assembly 10 through the opening portion and also accommodates an electrolyte.

The battery can 20 is electrically connected to the second electrode tab 12 of the electrode assembly 10. Therefore, the battery can 20 has the same polarity as the second electrode tab 12. For example, the second electrode tab 12 may be attached to the battery can 20 by welding.

The battery can 20 has a beading portion 21 and a crimping portion 22 provided at an upper end thereof. The crimping portion 22 may be provided on a peripheral portion of the opening portion of the battery can 20.

The beading portion 21 is formed at the upper side of the electrode assembly 10. The beading portion 21 is formed by pressing a periphery of an outer peripheral surface of the battery can 20. The beading portion 21 prevents the electrode assembly 10, which has a size corresponding to a width of the battery can 20, from being withdrawn through the opening portion of the upper end of the battery can 20. The beading portion 21 may serve as a support portion on which the top cap 30 is seated.

The crimping portion 22 is formed on an upper portion of the beading portion 21. The crimping portion 22 extends and bends to surround a part of an outer peripheral surface of the top cap 30 disposed on the beading portion 21 and surround a part of an upper surface of the top cap 30.

The battery can may have a cylindrical shape. A diameter of a circle of each of the two opposite ends of the battery can may be 30 mm to 55 mm, and a height of the battery can may be 60 mm to 120 mm. For example, a value of circular diameter x height of the cylindrical battery can may be 46 mm x 60 mm, 46 mm x 80 mm, 46 mm x 90 mm, or 46 mm x 120 mm.

In particular, for example, the cylindrical secondary battery may be a cylindrical secondary battery having a ratio of a form factor larger than about 0.4 (a ratio of the form factor is defined as a value obtained by dividing a diameter of the cylindrical secondary battery by a height of the cylindrical secondary battery, i.e., a ratio of a diameter Φ to a height H).

In this case, the form factor means a value indicating the diameter and the height of the cylindrical secondary battery. For example, the cylindrical secondary battery according to the embodiment of the present invention may be 46110 cell, 48750 cell, 48110 cell, 48800 cell, 46800 cell, and 46900 cell. In the numerical value indicating the form factor, the first two numbers indicate a diameter of the cell, the next two numbers indicate a height of the cell, and the final number 0 indicates that a cross-section of the cell is circular.

The cylindrical secondary battery according to the embodiment of the present invention is an approximately cylindrical cell, and the cylindrical secondary battery may have a diameter of about 46 mm, a height of about 110 mm, and a ratio of the form factor of about 0.418.

The cylindrical secondary battery according to another embodiment is an approximately cylindrical cell, and the battery cell may have a diameter of about 48 mm, a height of about 75 mm, and a ratio of the form factor of about 0.640.

The cylindrical secondary battery according to still another embodiment is an approximately cylindrical cell, and the cylindrical secondary battery may have a diameter of about 48 mm, a height of about 110 mm, and a ratio of the form factor of about 0.436.

The cylindrical secondary battery according to yet another embodiment is an approximately cylindrical cell, and the battery cell may have a diameter of about 48 mm, a height of about 80 mm, and a ratio of the form factor of about 0.600.

The cylindrical secondary battery according to still yet another embodiment is an approximately cylindrical cell, and the cylindrical secondary battery may have a diameter of about 46 mm, a height of about 80 mm, and a ratio of the form factor of about 0.575.

The cylindrical secondary battery according to another further embodiment is an approximately cylindrical cell, and the cylindrical secondary battery may have a diameter of about 46 mm, a height of about 90 mm, and a ratio of the form factor of 0.511.

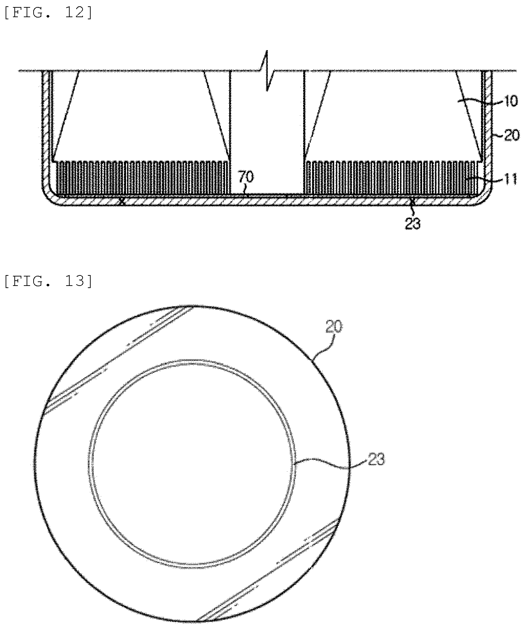

Referring to FIGS. 12 and 13, the battery can 20 may further include a venting portion 23 formed in a lower surface thereof. The venting portion 23 corresponds to a region having a smaller thickness than a peripheral region of the lower surface of the battery can 20. The venting portion 23 is structurally weak in comparison with the peripheral region. Therefore, when an abnormality occurs on the cylindrical secondary battery 1 and an internal pressure increases to a predetermined level or higher, the venting portion 23 is fractured, and gas produced in the battery can 20 is discharged.

The cylindrical secondary battery 1 according to the embodiment of the present invention has a structure in which both the positive electrode terminal and the negative electrode terminal are provided at the upper side of the cylindrical secondary battery 1, as described below. For this reason, the upper structure is more complicated than the lower structure. Therefore, the venting portion 23 may be formed in the lower surface of the battery can 20 to smoothly discharge gas produced in the battery can 20.

The drawing according to the present invention illustrates only the case in which the venting portion 23 is continuously formed while defining a circle on the lower surface of the battery can 20, but the present invention is not limited thereto. The venting portion 23 may be discontinuously formed while defining a circle on the lower surface of the battery can 20. Alternatively, the venting portion 23 may have a straight shape or other shapes.

Referring to FIGS. 1 to 6, the top cap 30 is a component made of a metallic material having conductivity and covers the opening portion of the battery can 20. The top cap 30 is electrically connected to the first electrode tab 11 of the electrode assembly 10 and electrically insulated from the battery can 20. Therefore, the top cap 30 may serve as a first electrode terminal of the cylindrical secondary battery 1.

The top cap 30 is seated on the beading portion 21 formed on the battery can 20 and fixed by the crimping portion 22.

The top cap 30 may include a protruding portion 31 protruding to the outside of the battery can. The protruding portion 31 may protrude to be higher than an upper surface of the conductive washer 40 to be described below so that the protruding portion 31 easily comes into contact with the electrical connection component such as the busbar. The upper surface means a surface directed in a direction toward the outside of the battery can of the cylindrical battery, i.e., a direction toward the opening portion. The lower surface means a surface directed in a direction toward the bottom surface of the battery can.

The gasket 50 may be provided between the battery can and the top cap or between the top cap 30 and the crimping portion 22 of the battery can 20. The gasket 50 serves to ensure sealability of the battery can 20 and implement electrical insulation between the battery can 20 and the top cap 30.

Referring to FIGS. 1 to 7, the conductive washer 40 is made of a metallic material having conductivity. The conductive washer 40 is a component having an approximately disk shape having a hole formed in a central portion thereof.

The conductive washer 40 extends in a direction toward the central portion from the outer peripheral portion of the upper surface of the conductive washer 40 that adjoins the peripheral portion of the opening portion of the battery can. The conductive washer 40 has a hole formed in a central portion thereof so that the protruding portion 31 of the top cap 30 may be exposed.

The upper surface means a surface directed in a direction toward the outside of the battery can of the cylindrical battery, i.e., a direction toward the opening portion. The lower surface means a surface directed in a direction toward the bottom surface of the battery can. The central portion means a central region of the upper surface and/or the lower surface of the conductive washer 40.

The conductive washer 40 is electrically connected to the battery can and adjoins at least a part of the peripheral portion of the opening portion or adjoin the crimping portion 22 of the battery can 20. That is, the secondary battery has the crimping portion provided on the peripheral portion of the opening portion of the battery can, and the conductive washer 40 adjoins the crimping portion 22. As the conductive washer 40 adjoins the crimping portion 22, the conductive washer 40 may have the same polarity as the battery can and serve as a second electrode terminal having the second polarity.

The conductive washer 40 may be coupled to the crimping portion 22 by welding, for example. For example, the welding may be laser welding.

The conductive washer 40 is electrically insulated from the top cap 30. The top cap 30 is exposed through the hole formed in the central portion of the conductive washer 40. The conductive washer 40 is spaced apart from the protruding portion 31 of the top cap 30. In addition, the conductive washer 40 is spaced apart upward and downward from the remaining portion except for the protruding portion 31 of the top cap 30. Therefore, the conductive washer 40 may be electrically connected to the second electrode tab 12 and the battery can 20 and serve as the second electrode terminal of the cylindrical secondary battery 1.

That is, the cylindrical secondary battery 1 according to the embodiment of the present invention includes the conductive washer 40, such that the cylindrical secondary battery 1 has the structure in which both the first electrode terminal having the first polarity and the second electrode terminal having the second polarity are disposed in the same direction.

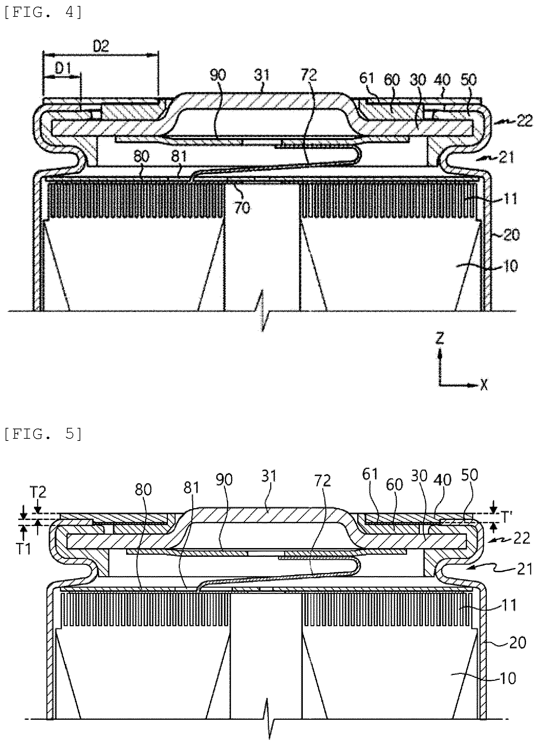

Referring to FIG. 4, a width D2 of the conductive washer 40 is larger than a width D1 of the upper surface of the crimping portion 22 of the battery can 20.

This is to increase a coupling area between the electrical connection component and the conductive washer 40 when the electrical connection component such as the busbar is coupled to the conductive washer 40 in order to connect the plurality of cylindrical secondary batteries 1. Since the coupling area between the electrical connection component and the conductive washer 40 is increased as described above, the welding process may be smoothly performed, the fastening force between the two components may be increased, and the electrical resistance on the coupling portion may be reduced.

The upper surface means a surface directed in a direction toward the outside of the battery can of the cylindrical battery, i.e., a direction toward the opening portion. The lower surface means a surface directed in a direction toward the bottom surface of the battery can. The width D2 of the conductive washer 40 means a length extending in the direction toward the central portion from the outer peripheral portion of the upper surface of the conductive washer 40 that adjoins the peripheral portion of the opening portion of the battery can. The width D1 of the upper surface of the crimping portion 22 means a length extending from the peripheral portion of the opening portion of the battery can in the direction toward the central portion from the outer peripheral portion of the upper surface of the battery can. The upper surface of the crimping portion 22 means a portion at the end of the crimping portion 22 except for a curved portion that surrounds lateral and edge portions of the crimping portion 22.

The width D2 of the conductive washer 40 may be set to vary depending on the diameter of the secondary battery. The cylindrical secondary battery is an approximately cylindrical cell. For example, the width D2 of the conductive washer 40 may be 10% or more, 11% or more, 12% or more, or 13% or more of a maximum diameter of the cell. The cylindrical secondary battery is an approximately cylindrical cell. For example, the width D2 of the conductive washer 40 may be 50% or less, 45% or less, 43% or less, or 40% or less of the maximum diameter of the cell.

The width D1 of the upper surface of the crimping portion 22 is smaller than the width D2 of the conductive washer 40. The cylindrical secondary battery is an approximately cylindrical cell. For example, the width D1 of the upper surface of the crimping portion 22 may be 1% or more, 2% or more, or 3% or more of the maximum diameter of the cell. The cylindrical secondary battery is an approximately cylindrical cell. For example, the width D1 of the upper surface of the crimping portion 22 may be 13% or less, 12% or less, 11% or less, or 10% or less of the maximum diameter of the cell.

Referring to FIG. 5, a sum of a thickness T1 of a portion of the crimping portion 22 adjoining the conductive washer 40 and a thickness T2 of a portion of the conductive washer 40 adjusting the crimping portion 22 is 90% to 200% of a thickness T' of a portion of the conductive washer 40 that does not adjoin the crimping portion 22.

For example, the thickness T1 of the crimping portion 22 may be 0.1 mm or more, 0.15 mm or more, 0.2 mm or more, 0.25 mm or more, 0.3 mm or more, or 0.35 mm or more. The thickness T1 of the crimping portion 22 may be 0.75 mm or less, 0.7 mm or less, 0.65 mm or less, 0.6 mm or less, 0.55 mm or less, or 0.5 mm or less.

The thickness T2 of the portion of the conductive washer 40 adjoining the crimping portion 22 may be 0.25 mm or more, 0.3 mm or more, 0.35 mm or more, or 0.4 mm or more. The thickness T2 of the portion of the conductive washer 40 adjoining the crimping portion 22 may be 0.65 mm or less, 0.6 mm or less, 0.55 mm or less, or 0.5 mm or less.

The thickness T' of the portion of the conductive washer 40, which does not adjoin the crimping portion 22, may be 0.4 mm or more, 0.45 mm or more, or 0.5 mm or more. The thickness T' of the portion of the conductive washer 40, which does not adjoin the crimping portion 22, may be 0.7 mm or less, 0.65 mm or less, or 0.6 mm or less.

When the thickness of the conductive washer is set to vary depending on the region, the metal thickness may be constant in all routes for electric current, thereby reducing overall resistance.

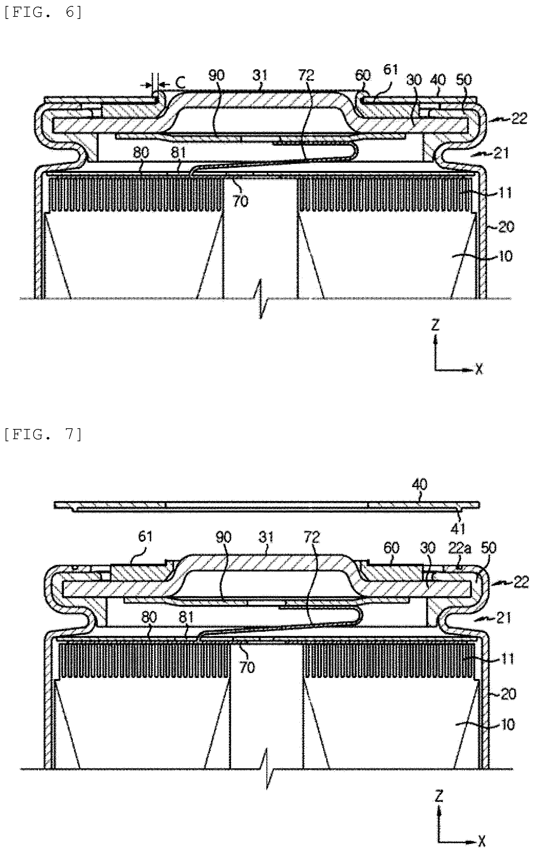

Meanwhile, referring to FIG. 7, the battery can 20 may include an insertion groove 22a provided in the upper surface of the crimping portion 22. The conductive washer 40 may include an insertion protrusion 41 having a shape corresponding to the insertion groove 22a and coupled to the insertion groove 22a.

The insertion groove 22a and the insertion protrusion 41 may increase the contact area between the conductive washer 40 and the crimping portion 22, thereby increasing the fastening force and reducing the electrical resistance on the coupling portion. In addition, the insertion groove 22a and the insertion protrusion 41 may guide a seating position of the conductive washer 40 when the conductive washer 40 is seated on the crimping portion 22, thereby preventing the contact between the conductive washer 40 and the protruding portion 31 of the top cap 30. In addition, the insertion groove 22a and the insertion protrusion 41 may prevent the conductive washer 40 from moving on the crimping portion 22 during the welding process, thereby improving the process performance.

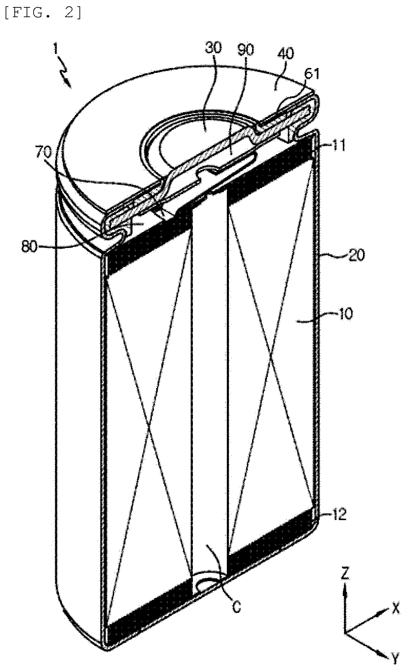

Referring to FIGS. 2 to 6, the insulative washer 60 is provided between the top cap 30 and the conductive washer 40 and electrically insulates the top cap 30 and the conductive washer 40. The insulative washer 60 is made of a material having insulating property.

According to the cylindrical secondary battery 1 according to the embodiment of the present invention, the top cap 30 serves as the first electrode terminal having the first polarity, and the conductive washer 40 serves as the second electrode terminal having the second polarity opposite to the first polarity. Therefore, the top cap 30 and the conductive washer 40 need to be kept in an electrically insulated state. Therefore, the insulative washer 60 may be applied to stably maintain the insulated state.

The insulative washer 60 is provided between the top cap 30 and the lower surface of the conductive washer 40. As described above, the conductive washer 40 has the width D2 larger than the width D1 of the upper surface of the crimping portion 22 and extends in the direction from the crimping portion 22 toward the protruding portion 31 of the top cap 30. Therefore, the insulative washer 60 may extend to cover an inner surface of the hole formed in the central portion of the conductive washer 40 so that the inner surface of the hole formed in the conductive washer 40 cannot come into contact with the protruding portion 31 of the top cap 30.

When the insulative washer 60 is made of a resin material, the insulative washer 60 may be coupled to the top cap 30 by thermal bonding. In this case, sealability may be improved at the coupling interface between the insulative washer 60 and the top cap 30.

Referring to FIGS. 2 to 6, the fixing member 61 is provided between the conductive washer 40 and the insulative washer 60. Alternatively, the fixing member 61 has two surfaces facing the conductive washer 40 and the insulative washer 60, and the two surfaces of the fixing member 61 may respectively directly adjoin the conductive washer 40 and the insulative washer 60. The configuration in which the fixing member 61 directly adjoins the conductive washer 40 and the insulative washer 60 means that the fixing member 61 is positioned only on the interface between the conductive washer 40 and the insulative washer 60 and the fixing member 61 does not go beyond or separate from the range of the interface. In this case, the conductive washer may be advantageously fixed despite height dispersion of about 0.1 mm to 0.2 mm that occurs during the crimping process of the cell assembly process.

The conductive washer 40 and the insulative washer 60 may be coupled by the fixing member 61, and sealability may be improved at the coupling interface between the conductive washer 40 and the insulative washer 60.

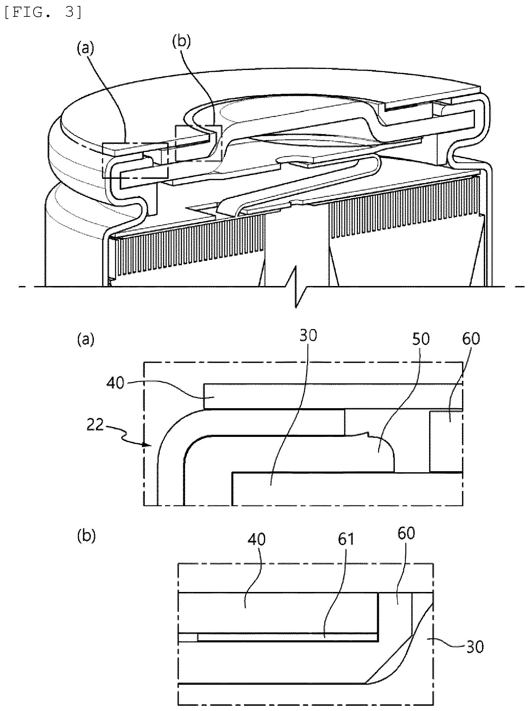

FIG. 3 is a schematic view illustrating a part of the cylindrical secondary battery according to the embodiment of the present invention, in which FIG. 3A is an enlarged cross-sectional view illustrating the conductive washer adjoining the upper surface of the crimping portion, and FIG. 3B is an enlarged cross-sectional view illustrating the fixing member provided between the conductive washer and the insulative washer.

Referring to FIG. 3A, as described above, the cylindrical secondary battery includes the conductive washer 40 applied to expand the negative electrode terminal, and the insulative washer 60 applied to prevent contact between the conductive washer 40 and the top cap 30.

The conductive washer 40 serves to ensure a sufficient area in which the connection component (e.g., the busbar) is welded to manufacture the battery pack by connecting the plurality of cylindrical secondary batteries. The height dispersion (indicated by the arrow) may occur because of the nature of the crimping process in the upper surface of the crimped region of the cylindrical secondary battery is formed by bending metal. For this reason, it may be difficult to smoothly fix the conductive washer 40 to the crimping portion 22.

The insulative washer 60 may be used to structurally fix the conductive washer 40 in order to fix the conductive washer 40. However, to implement the structural fixation, the rigidity of the conductive washer 40 needs to be ensured to some extent or more, and the thickness of the conductive washer 40 needs to be ensured to a predetermined level or more. The restriction on the rigidity and/or thickness may decrease the range of choice related to the material of the conductive washer 40.

Referring to FIG. 3B, when the conductive washer is fixed by applying the fixing member 61 to the interface between the conductive washer 40 and the insulative washer 60, the conductive washer 40 may be seated on the crimping portion without moving.

For example, the fixing member may be a curing agent. The curing agent may be provided on the coupling interface between the conductive washer 40 and the insulative washer 60 by being injected by a nozzle. For example, any curing agent may be applied to the present invention as long as the curing agent is injected in a liquid state having fluidity and then cured as time passes. The curing agent may be UV resin. In addition, the curing agent is not particularly limited as long as the curing agent may be used in the present technical field.

The curing agent may be provided in an area that is 10%, 15%, 20%, 25%, or 30% or more of an area in which the conductive washer and the insulative washer adjoin each other. The conductive washer fixed by the curing agent in the above-mentioned range is not deformed by an external pressing force.

The curing agent serves to prevent the conductive washer from being deformed by a vacant space when the external pressing force is applied. When the rigidity of the conductive washer is high, sufficient rigidity may be ensured even in a case in which the area in which the conductive washer and the insulative washer adjoin each other is small. The area of the curing agent is not limited to the range of the area in which the conductive washer and the insulative washer adjoin each other as long as the curing agent may maintain the rigidity of the conductive washer even in the case in which the external pressing force is applied.

Since the fixing structure using the fixing member 61 is applied as described above, the rigidity of the conductive washer is not particularly required, such that the material in a condition in which electrical resistance is low may be selected. In addition, since there is no restriction on the thickness of the conductive washer, an overall increase in volume of the secondary battery caused by the application of the conductive washer may be prevented, such that energy density may be improved.

Referring to FIG. 5, the insulative washer 60 may extend to cover an area of 1% or more, 2% or more, 3% or more, or 4% or more of the overall area of the upper surface of the conductive washer 40. The insulative washer 60 may extend to cover an area of 10% or less, 9% or less, 8% or less, or 7% or less of the overall area of the upper surface of the conductive washer 40. When the above-mentioned range is satisfied, the effect of preventing the contact between the conductive washer 40 and the top cap 30 may be further improved.

A width C by which the insulative washer 60 extends to cover a part of the upper surface of the conductive washer 40 may be 0.1 mm or more, 0.15 mm or more, 0.2 mm or more, 0.25 mm or more, 0.3 mm or more, or 0.35 mm or more. The width C by which the insulative washer 60 extends to cover a part of the upper surface of the conductive washer 40 may be 3 mm or less, 2.5 mm or less, 2 mm or less, 1.5 mm or less, 1 mm or less, or 0.5 mm or less.

The width C by which the insulative washer 60 extends to cover a part of the upper surface of the conductive washer 40 means a length of a portion covered by the insulative washer 60 in a direction from the central portion toward the outer peripheral portion of the width D2 of the conductive washer 40. The width D2 of the conductive washer 40 may be set to vary depending on the diameter of the secondary battery. The cylindrical secondary battery is an approximately cylindrical cell.

For example, the width D2 of the conductive washer 40 may be 10% or more, 11% or more, 12% or more, or 13% or more of a maximum diameter of the cell. The cylindrical secondary battery is an approximately cylindrical cell. For example, the width D2 of the conductive washer 40 may be 50% or less, 45% or less, 43% or less, or 40% or less of the maximum diameter of the cell.

When the insulative washer 60 extends to the edge region of the upper surface of the conductive washer 40 as described above, the process of seating the conductive washer 40 on the crimping portion 22 may be more accurately and quickly performed. The insulative washer 60 is inserted through the hole of the conductive washer 40 and fixed to the conductive washer 40, and then the coupled body including the conductive washer 40 and the insulative washer 60 is seated on the crimping portion 22 and the top cap 30, such that the conductive washer 40 may be naturally seated on an accurate position. In this case, the protruding portion 31 of the top cap 30 is exposed to the outside of the battery can through the hole formed in the central portion of the insulative washer 60.

The coupled body of the insulative washer 60 and the conductive washer 40 illustrated in FIG. 6 may be manufactured by insert injection molding. That is, the insert injection molding is performed so that the conductive washer 40 made of a metallic material is inserted into/fixed to the insulative washer 60 made of a resin material, such that the coupled body of the insulative washer 60 and the conductive washer 40 may be manufactured. As the coupled body is disposed on the crimping portion 22 and the top cap 30, the alignment may be naturally performed.

Referring to FIGS. 2 to 6, the current collecting plate 70 is connected to the upper portion of the electrode assembly 10. The current collecting plate 70 is made of a metallic material having conductivity and connected to the first electrode tab 11. A lead 72 may be connected to the current collecting plate 70. The lead 72 may extend upward from the electrode assembly 10 and be coupled directly to the top cap 30 or coupled to the connection plate 90 coupled to the lower surface of the top cap 30.

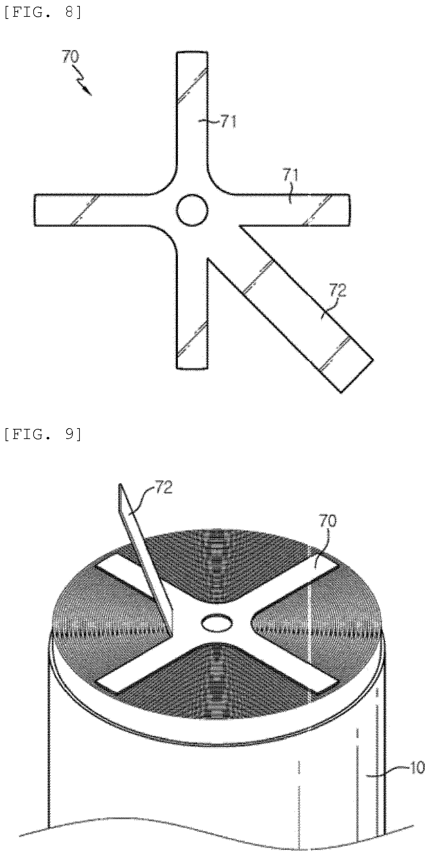

Referring to FIGS. 8 and 9, the current collecting plate 70 may include a plurality of sub-plates 71 radially extending from a central portion thereof. The current collecting plate 70 and the lead 72 may be integrated. In this case, like the sub-plate 71, the lead 72 may be provided in the form of a long plate extending outward from the central portion of the current collecting plate 70. The lead 72 may be formed between the adjacent sub-plates 71. However, the present invention is not limited by the structure of the current collecting plate 70. The current collecting plate 70 may have a shape corresponding to the upper surface of the electrode assembly 10 so as to cover the entire upper portion of the first electrode tab 11.

Although not illustrated in the drawings, the current collecting plate 70 may include a plurality of concave-convex portions radially formed on the lower surface thereof. When the concave-convex portions are formed, the concave-convex portions may be pressed into the electrode tabs 11 and 12 by pushing the current collecting plate 70.

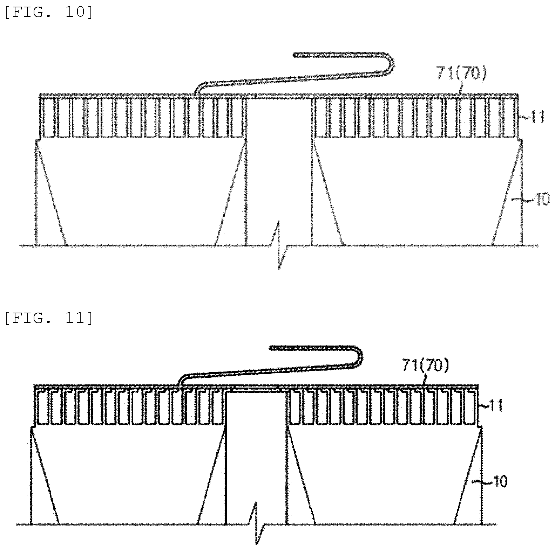

Referring to FIG. 10, the current collecting plate 70 is coupled to the end of the first electrode tab 11. For example, the first electrode tab 11 and the current collecting plate 70 may be coupled by laser welding. The laser welding may be performed by partially melting a base material of the current collecting plate 70. Alternatively, the laser welding may be performed in a state in which welding solder is interposed between the current collecting plate 70 and the first electrode tab 11. In this case, the solder may have a lower melting point than the current collecting plate 70 and the first electrode tab 11.

Referring to FIG. 11, the current collecting plate 70 may be coupled to a coupling surface formed by bending the end of the first electrode tab 11 in a direction parallel to the current collecting plate 70. For example, the bending direction of the first electrode tab 11 may be a direction toward the winding center of the electrode assembly 10. In the case in which the first electrode tab 11 has a bent shape as described above, a space occupied by the first electrode tab 11 may be reduced, thereby improving energy density.

Referring to FIG. 12, the current collecting plate 70 may also be coupled to the lower surface of the electrode assembly 10. In this case, one surface of the current collecting plate 70 may be coupled to the second electrode tab 12 of the electrode assembly 10 by welding, and the other surface of the current collecting plate 70 may be coupled to the bottom surface in the battery can 20 by welding. The coupling structure between the second electrode tab 12 and the current collecting plate 70 coupled to the lower surface of the electrode assembly 10 is substantially identical to the current collecting plate 70 coupled to the upper surface of the electrode assembly 10.

Although not illustrated in the drawings, like the first electrode tab 11, the second electrode tab 12 may also have a shape bent in the direction toward the winding center of the electrode assembly 10.

The insulation plate 80 is disposed between the beading portion 21 and the upper end of the electrode assembly 10 or between the beading portion 21 and the current collecting plate 70 coupled to the upper portion of the electrode assembly 10 and prevents the contact between the first electrode tab 11 and the battery can 20 or the contact between the current collecting plate 70 and the battery can 20.

The insulation plate 80 has a lead hole 81 through which the lead 72, which extends upward from the current collecting plate 70 or the first electrode tab 11, may be extended.

The lead 72 is extended upward through the lead hole 81 and coupled to a lower surface of the connection plate 90 or a lower surface of the top cap 30. As described above, the cylindrical secondary battery 1 according to the embodiment of the present invention has a structure in which the top cap 30 and the conductive washer 40 provided at one side of the battery can 20 based on the longitudinal direction (the direction parallel to the Z-axis in FIG. 2) may be used as the first electrode terminal and the second electrode terminal, respectively. Therefore, when the plurality of cylindrical secondary batteries 1 according to the embodiment of the present invention are electrically connected, the electrical connection component such as the busbar may be disposed at only one side of the cylindrical secondary battery 1. Therefore, it is possible to simplify the structure and improve the energy density.

The embodiment of the present invention provides a method of manufacturing the secondary battery according to the embodiment of the present invention, the method including: accommodating the electrode assembly 10, which has the first electrode tab and the second electrode tab, in the battery can 20 electrically connected to the second electrode tab and having the opening portion configured to accommodate the electrode assembly; covering the opening portion of the battery can by coupling: the top cap 30 disposed in the opening portion of the battery can 20 and electrically connected to the first electrode tab; the gasket 50 provided between the battery can and the top cap; the conductive washer 40 electrically connected to the battery can and configured to adjoin at least a part of the peripheral portion of the opening portion; and the insulative washer 60 provided between the top cap and the conductive washer and configured to electrically insulate the top cap 30 and the conductive washer 40; and injecting the curing agent between the conductive washer 40 and the insulative washer 60.

The embodiment of the present invention provides a method of manufacturing the secondary battery according to the embodiment of the present invention the method including: accommodating the electrode assembly 10, which has the first electrode tab and the second electrode tab, in the battery can 20 electrically connected to the second electrode tab and having the opening portion configured to accommodate the electrode assembly; covering the opening portion of the battery can 20 by coupling: a top cap 30 disposed in the opening portion of the battery can 20 and electrically connected to the first electrode tab; the gasket 50 provided between the battery can and the top cap; and the insulative washer 60 provided on the outer peripheral surface of the top cap; injecting the curing agent on the insulative washer 60; and coupling the conductive washer 40 to the curing agent, the conductive washer 40 being electrically connected to the battery can 20 and configured to adjoin at least a part of the peripheral portion of the opening portion.

The curing agent may be injected through the nozzle. As described above, any curing agent may be applied to the present invention as long as the curing agent is injected in a liquid state having fluidity and then cured as time passes.

The injection includes a case in which the curing agent is injected between the conductive washer 40 and the insulative washer 60 and a case in which the curing agent is applied onto the insulative washer 60.

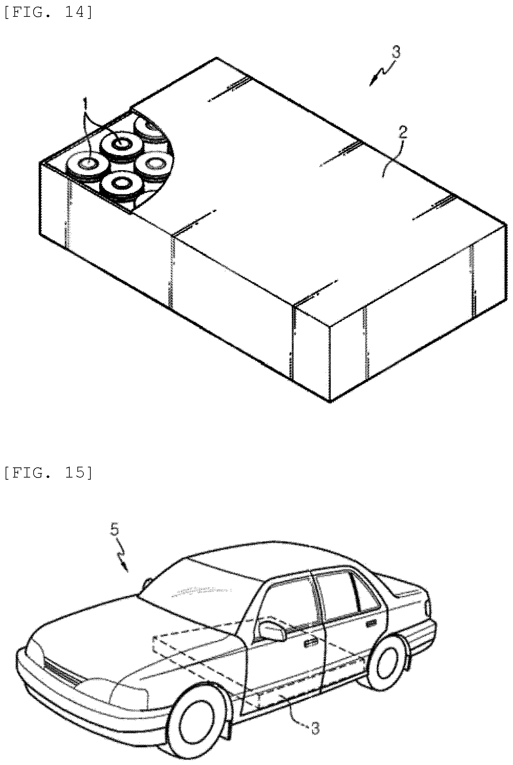

Referring to FIG. 14, a battery pack 3 according to the embodiment of the present invention includes: a secondary battery assembly configured by electrically connecting the secondary batteries 1 according to the embodiment of the present invention described above; and a pack housing 2 configured to accommodate the secondary battery assembly. For convenience of illustration in the drawings, components such as a busbar and an electric power terminal for electrical connection are omitted from the drawings according to the present invention.

Referring to FIG. 15, for example, a vehicle 5 according to the embodiment of the present invention may be an electric vehicle and includes the battery pack 3 according to the embodiment of the present invention. The vehicle 5 operates by receiving electric power from the battery pack 3 according to the embodiment of the present invention.

The present invention has been described with reference to the limited embodiments and the drawings, but the present invention is not limited thereto.

## Claims

1. A secondary battery (1) comprising:
an electrode assembly (10) having a first electrode tab (11) and a second electrode tab (12);
a battery can (20) electrically connected to the second electrode tab (12) and having an opening portion configured to accommodate the electrode assembly (10);
a top cap (30) configured to cover the opening portion of the battery can (20) and electrically connected to the first electrode tab (11);
a gasket (50) provided between the battery can (20) and the top cap (30);
a conductive washer (40) electrically connected to the battery can (20) and configured to adjoin at least a part of a peripheral portion of the opening portion;
an insulative washer (60) provided between the top cap (30) and the conductive washer (40) and configured to electrically insulate the top cap (30) and the conductive washer (40); and
a fixing member (61) provided between the conductive washer (40) and the insulative washer (60),
wherein a crimping portion (22) of the battery can (20) is provided on the peripheral portion of the opening portion of the battery can (20), and the conductive washer (40) adjoins the crimping portion (22), and
wherein the conductive washer (40) has a disk shape having a hole formed in a central portion thereof.

2. The secondary battery (1) of claim 1, wherein the fixing member (61) has two surfaces facing the conductive washer (40) and the insulative washer (60), respectively, and the two surfaces of the fixing member (61) directly adjoin the conductive washer (40) and the insulative washer (60), respectively.

3. The secondary battery (1) of claim 1, wherein the fixing member (61) is a curing agent.

4. The secondary battery (1) of claim 3, wherein the curing agent is provided in an area of 10% or more of an area in which the conductive washer (40) and the insulative washer (60) adjoin each other.

5. The secondary battery (1) of claim 1, wherein a width (D2) of the conductive washer (40) is larger than a width (D1) of an upper surface of the crimping portion (22).

6. The secondary battery (1) of claim 1, wherein a sum of a thickness (T1) of a portion of a crimping portion (22) adjoining the conductive washer (40) and a thickness (T2) of a portion of the conductive washer (40) adjoining the crimping portion (22) is 90% to 200% of a thickness (T') of a portion of the conductive washer (40) that does not adjoin the crimping portion (22).

7. The secondary battery (1) of claim 1, wherein the top cap (30) comprises a protruding portion (31) protruding to the outside of the battery can (20).

8. The secondary battery (1) of claim 1, wherein the insulative washer (60) covers an inner surface of a hole formed in a central portion of the conductive washer (40).

9. The secondary battery (1) of claim 1, wherein the insulative washer (60) extends to cover an area of 1% or more and 10% or less of an overall area of an upper surface of the conductive washer (40).

10. The secondary battery (1) of claim 1, wherein the battery can (20) comprises an insertion groove (22a) provided in an upper surface of the crimping portion (22).

11. The secondary battery (1) of claim 1, wherein the first electrode tab (11) is a non-coated portion of a first electrode current collector constituting the electrode assembly (10), the non-coated portion having no first electrode active material, and the second electrode tab (12) is a non-coated portion of a second electrode current collector constituting the electrode assembly (10), the non-coated portion having no second electrode active material.

12. A method of manufacturing the secondary battery (1) according to any one of claims 1 to 11, the method comprising:
accommodating the electrode assembly (10), which has the first electrode tab (11) and the second electrode tab (12), in the battery can (20) electrically connected to the second electrode tab (12) and having an opening portion configured to accommodate the electrode assembly (10);
covering the opening portion of the battery can (20) by coupling: the top cap (30) disposed in the opening portion of the battery can (20) and electrically connected to the first electrode tab (11); the gasket (50) provided between the battery can (20) and the top cap (30); the conductive washer (40) electrically connected to the battery can (20) and configured to adjoin at least a part of the peripheral portion of the opening portion; and an insulative washer (60) provided between the top cap (30) and conductive washer (40) and configured to electrically insulate the top cap (30) and the conductive washer (40); and
injecting a curing agent between the conductive washer (40) and the insulative washer (60).

13. A battery pack (3) comprising:
the secondary battery (1) according to any one of claims 1 to 11; and
a pack housing (2) configured to accommodate the secondary battery (1).

14. A vehicle (5) comprising the battery pack (3) according to claim 13.

## Patentansprüche

1. Sekundärbatterie (1) aufweisend:
eine Elektrodenanordnung (10) mit einer ersten Elektrodenlasche (11) und einer zweiten Elektrodenlasche (12);
ein Batteriegehäuse (20), das elektrisch mit der zweiten Elektrodenlasche (12) verbunden ist und einen Öffnungsabschnitt aufweist, der konfiguriert ist, um die Elektrodenanordnung (10) aufzunehmen;
eine obere Abdeckung (30), die konfiguriert ist, den Öffnungsabschnitt des Batteriegehäuses (20) abzudecken und elektrisch mit der ersten Elektrodenlasche (11) verbunden ist;
eine Dichtung (50), die zwischen dem Batteriegehäuse (20) und der oberen Abdeckung (30) bereitgestellt ist;
eine leitfähige Unterlegscheibe (40), die elektrisch mit dem Batteriegehäuse (20) verbunden ist und konfiguriert ist, um an mindestens einen Teil eines Umfangsabschnitts des Öffnungsabschnitts anzugrenzen;
eine isolierende Unterlegscheibe (60), die zwischen der oberen Abdeckung (30) und der leitfähigen Unterlegscheibe (40) bereitgestellt ist und konfiguriert ist, um die obere Abdeckung (30) und die leitfähige Unterlegscheibe (40) elektrisch zu isolieren; und
ein Befestigungselement (61), das zwischen der leitfähigen Unterlegscheibe (40) und der isolierenden Unterlegscheibe (60) bereitgestellt ist,
wobei ein Crimpabschnitt (22) des Batteriegehäuses (20) an dem Umfangsabschnitt des Öffnungsabschnitts des Batteriegehäuses (20) bereitgestellt ist und die leitfähige Unterlegscheibe (40) an den Crimpabschnitt (22) angrenzt, und
wobei die leitfähige Unterlegscheibe (40) eine Scheibenform mit einem Loch aufweist, das in einem zentralen Abschnitt davon ausgebildet ist.

2. Sekundärbatterie (1) nach Anspruch 1, wobei das Befestigungselement (61) zwei Oberflächen aufweist, die der leitfähigen Unterlegscheibe (40) bzw. der isolierenden Unterlegscheibe (60) zugewandt sind, und die zwei Oberflächen des Befestigungselements (61) direkt an die leitfähige Unterlegscheibe (40) bzw. die isolierende Unterlegscheibe (60) angrenzen.

3. Sekundärbatterie (1) nach Anspruch 1, wobei das Befestigungselement (61) ein Härtungsmittel ist.

4. Sekundärbatterie (1) nach Anspruch 3, wobei das Härtungsmittel in einer Fläche von 10 % oder mehr einer Fläche bereitgestellt ist, in der die leitfähige Unterlegscheibe (40) und die isolierende Unterlegscheibe (60) aneinander angrenzen.

5. Sekundärbatterie (1) nach Anspruch 1, wobei eine Breite (D2) der leitfähigen Unterlegscheibe (40) größer als eine Breite (D1) einer oberen Oberfläche des Crimpabschnitts (22) ist.

6. Sekundärbatterie (1) nach Anspruch 1, wobei eine Summe einer Dicke (T1) eines Abschnitts eines Crimpabschnitts (22), der an die leitfähige Unterlegscheibe (40) angrenzt, und einer Dicke (T2) eines Abschnitts der leitfähigen Unterlegscheibe (40), der an den Crimpabschnitt (22) angrenzt, 90 % bis 200 % einer Dicke (T') eines Abschnitts der leitfähigen Unterlegscheibe (40) beträgt, der nicht an den Crimpabschnitt (22) angrenzt.

7. Sekundärbatterie (1) nach Anspruch 1, wobei die obere Abdeckung (30) einen vorstehenden Abschnitt (31) aufweist, der zur Außenseite des Batteriegehäuses (20) vorsteht.

8. Sekundärbatterie (1) nach Anspruch 1, wobei die isolierende Unterlegscheibe (60) eine innere Oberfläche eines Lochs abdeckt, das in einem zentralen Abschnitt der leitfähigen Unterlegscheibe (40) ausgebildet ist.

9. Sekundärbatterie (1) nach Anspruch 1, wobei sich die isolierende Unterlegscheibe (60) erstreckt, um eine Fläche von 1 % oder mehr und 10 % oder weniger einer Gesamtfläche einer oberen Oberfläche der leitfähigen Unterlegscheibe (40) abzudecken.

10. Sekundärbatterie (1) nach Anspruch 1, wobei das Batteriegehäuse (20) eine Einsetznut (22a) aufweist, die in einer oberen Oberfläche des Crimpabschnitts (22) bereitgestellt ist.

11. Sekundärbatterie (1) nach Anspruch 1, wobei die erste Elektrodenlasche (11) ein nicht-beschichteter Abschnitt eines ersten Elektrodenstromkollektors ist, der die Elektrodenanordnung (10) bildet, wobei der nicht beschichtete Abschnitt ohne ein erstes aktives Elektrodenmaterial gebildet ist, und die zweite Elektrodenlasche (12) ein nicht-beschichteter Abschnitt eines zweiten Elektrodenstromkollektors ist, der die Elektrodenanordnung (10) bildet, wobei der nicht beschichtete Abschnitt ohne ein zweites aktives Elektrodenmaterial gebildet ist.

12. Verfahren zum Herstellen der Sekundärbatterie (1) nach einem der Ansprüche 1 bis 11, wobei das Verfahren aufweist:
Aufnehmen der Elektrodenanordnung (10), die die erste Elektrodenlasche (11) und die zweite Elektrodenlasche (12) aufweist, in dem Batteriegehäuse (20), das elektrisch mit der zweiten Elektrodenlasche (12) verbunden ist und einen Öffnungsabschnitt aufweist, der konfiguriert ist, um die Elektrodenanordnung (10) aufzunehmen;
Abdecken des Öffnungsabschnitts des Batteriegehäuses (20) durch Koppeln von Folgenden: die obere Abdeckung (30), die in dem Öffnungsabschnitt des Batteriegehäuses (20) angeordnet ist und elektrisch mit der ersten Elektrodenlasche (11) verbunden ist; die Dichtung (50), die zwischen dem Batteriegehäuse (20) und der oberen Abdeckung (30) bereitgestellt ist; die leitfähige Unterlegscheibe (40), die elektrisch mit dem Batteriegehäuse (20) verbunden ist und konfiguriert ist, um an mindestens einen Teil des Umfangsabschnitts des Öffnungsabschnitts anzugrenzen; und eine isolierende Unterlegscheibe (60), die zwischen der oberen Abdeckung (30) und der leitfähigen Unterlegscheibe (40) bereitgestellt ist und konfiguriert ist, um die obere Abdeckung (30) und die leitfähige Unterlegscheibe (40) elektrisch zu isolieren; und
Einführen eines Härtungsmittels zwischen die leitfähige Unterlegscheibe (40) und die isolierende Unterlegscheibe (60).

13. Batteriepack (3) aufweisend:
die Sekundärbatterie (1) nach einem der Ansprüche 1 bis 11; und
ein Packgehäuse (2), das konfiguriert ist, um die Sekundärbatterie (1) aufzunehmen.

14. Fahrzeug (5) aufweisend den Batteriepack (3) nach Anspruch 13.

## Revendications

1. Batterie secondaire (1) comprenant :
un ensemble d'électrodes (10) doté d'une languette de première électrode (11) et d'une languette de deuxième électrode (12) ;
un boîtier de batterie (20) connecté électriquement à la languette de deuxième électrode (12), et possédant une partie d'ouverture configurée pour recevoir l'ensemble d'électrodes (10) ;
un couvercle supérieur (30) configuré pour couvrir la partie d'ouverture du boîtier de batterie (20), et connecté électriquement à la languette de première électrode (11) ;
une garniture d'étanchéité (50) agencée entre le boîtier de batterie (20) et le couvercle supérieur (30) ;
une rondelle conductrice (40) connectée électriquement au boîtier de batterie (20) et configurée pour jouxter au moins une partie d'une portion périphérique de la partie d'ouverture ;
une rondelle isolante (60) agencée entre le couvercle supérieur (30) et la rondelle conductrice (40), et configurée pour isoler électriquement le couvercle supérieur (30) et la rondelle conductrice (40) ; et
un élément de fixation (61) agencé entre la rondelle conductrice (40) et la rondelle isolante (60),
une partie de sertissage (22) du boîtier de batterie (20) étant agencée sur la portion périphérique de la partie d'ouverture du boîtier de batterie (20), et la rondelle conductrice (40) jouxtant la partie de sertissage (22), et
la rondelle conductrice (40) ayant la forme d'un disque dans une partie centrale duquel un orifice a été pratiqué.

2. Batterie secondaire (1) selon la revendication 1, l'élément de fixation (61) possédant deux surfaces situées face à la rondelle conductrice (40) et à la rondelle isolante (60), respectivement, et les deux surfaces de l'élément de fixation (61) jouxtant directement la rondelle conductrice (40) et la rondelle isolante (60), respectivement.

3. Batterie secondaire (1) selon la revendication 1, l'élément de fixation (61) étant un agent de durcissement.

4. Batterie secondaire (1) selon la revendication 3, l'agent de durcissement étant agencé dans une zone de 10% ou davantage d'une zone dans laquelle la rondelle conductrice (40) et la rondelle isolante (60) se jouxtent.

5. Batterie secondaire (1) selon la revendication 1, une largeur (D2) de la rondelle conductrice (40) étant supérieure à une largeur (D1) d'une surface supérieure de la portion de sertissage (22).

6. Batterie secondaire (1) selon la revendication 1, une somme d'une épaisseur (T1) d'une partie d'une portion de sertissage (22) jouxtant la rondelle conductrice (40) et d'une épaisseur (T2) d'une partie de la rondelle conductrice (40) jouxtant la portion de sertissage (22) étant 90% à 200% d'une épaisseur (T') d'une partie de la rondelle conductrice (40) ne jouxtant pas la portion de sertissage (22).

7. Batterie secondaire (1) selon la revendication 1, le couvercle supérieur (30) comprenant une partie saillante (31) faisant saillie vers l'extérieur du couvercle du boîtier de la batterie (20).

8. Batterie secondaire (1) selon la revendication 1, la rondelle isolante (60) couvrant une surface intérieure d'un orifice formé dans une partie centrale de la rondelle conductrice (40)

9. Batterie secondaire (1) selon la revendication 1, la rondelle isolante (60) s'étendant pour couvrir une superficie de 1% ou davantage et 10% ou moins d'une superficie globale d'une surface supérieure de la rondelle conductrice (40)

10. Batterie secondaire (1) selon la revendication 1, le boîtier de la batterie (20) comprenant une rainure d'insertion (22a) pratiquée dans une surface supérieure de la portion de sertissage (22).

11. Batterie secondaire (1) selon la revendication 1, la languette de première électrode (11) étant une partie non revêtue d'un collecteur de courant de première électrode constituant l'ensemble d'électrode (10), la partie non revêtue étant dénuée de matière active de première électrode, et la languette de deuxième électrode (12) étant une partie non revêtue d'un collecteur de courant de deuxième électrode constituant l'ensemble d'électrode (10), la partie non revêtue étant dénuée de matière active de deuxième électrode.

12. Procédé de fabrication de la batterie secondaire (1) selon une quelconque des revendications 1 à 11, le procédé comprenant :
l'installation de l'ensemble d'électrode (10), possédant la languette de première électrode (11) et la languette de deuxième électrode (12), dans le boîtier de la batterie (20) connecté électriquement à la languette de deuxième électrode (12), et possédant une partie d'ouverture configurée pour accueillir l'ensemble d'électrode (10),
la couverture de la partie d'ouverture du boîtier de la batterie (20) en couplant : le couvercle supérieur (30) disposé dans la partie d'ouverture du boîtier de la batterie (20) et connecté électriquement à la languette de première électrode (11) ; la garniture d'étanchéité (50) agencée le boîtier de la batterie (20) et le couvercle supérieur (30) ; la rondelle conductrice (40) connectée électriquement au boîtier de la batterie (20) et configurée pour jouxter au moins une partie de la portion périphérique de la partie d'ouverture ; et une rondelle isolante (60) agencée entre le couvercle supérieur (30) et la rondelle conductrice (40), et configurée pour isoler électriquement le couvercle supérieur (30) et la rondelle conductrice (40) ;
et
l'injection d'un agent de durcissement entre la rondelle conductrice (40) et la rondelle isolante (60).

13. Bloc-batterie (3) comprenant :
la batterie secondaire (1) selon une quelconque des revendications 1 à 11 ; et
un boîtier de bloc (2) configuré pour recevoir la batterie secondaire (1).

14. Véhicule (5) comprenant le bloc-batterie (3) selon la revendication 13.
